# EUROPÄISCHE PATENTSCHRIFT

(11) **EP 1 558 392 B1**
(45) Veröffentlichungstag und Bekanntmachung des Hinweises auf die Patenterteilung: **10.01.2007**
(21) Anmeldenummer: 03789009.2
(22) Anmeldetag: 05.11.2003
(51) Int. Cl.: B01L 3/00, G01N 1/42, A01N 1/02

(54) **KAPILLARSUBSTRAT ZUR TIEFTEMPERATURSPEICHERUNG VON SUSPENSIONSPROBEN MIT BELÜFTUNGSÖFFNUNG**
CAPILLARY SUBSTRATE FOR THE CRYOPRESERVATION OF SUSPENSION SAMPLES, COMPRISING A VENTILATION OPENING
SUBSTRAT CAPILLAIRE POUR LA CRYOCONSERVATION D'ECHANTILLONS DE SUSPENSIONS, AVEC OUVERTURE DE VENTILATION

(30) Priorität: 06.11.2002 DE 10251669
(43) Veröffentlichungstag der Anmeldung: 03.08.2005
(73) Patentinhaber: Fraunhofer-Gesellschaft zur Förderung der angewandten Forschung e.V., 80686 München (DE)
(72) Erfinder: FUHR. Günter, 13187 Berlin (DE); ZIMMERMANN, Heiko, 66113 Saarbrücken (DE)
(74) Vertreter: Hertz, Oliver
(86) Internationale Anmeldenummer: PCT/EP2003/012358
(87) Internationale Veröffentlichungsnummer: WO 2004/040975

(56) Entgegenhaltungen:
- GB-A- 2 353 093
- US-A- 5 100 620
- US-A- 5 366 902
- US-A- 5 560 811
- US-B1- 6 271 045

## Beschreibung

Die Erfindung betrifft eine Vorrichtung zur Tieftemperaturspeicherung (insbesondere Kryospeicherung, Kryokonservierung) von Suspensionsproben, insbesondere eine Kryospeichervorrichtung für suspendierte biologische Zellen, Zellgruppen oder Zellbestandteile, und Verfahren zur Tieftemperaturspeicherung.

Die Kryospeicherung biologischer Proben besitzt zahlreiche Anwendungen, die auf eine andauernde Lagerung der Proben unter Erhaltung von deren Vitalitätszustand gerichtet sind. Die hierzu verwendeten Vorrichtungen sind an die jeweiligen Proben und die Anforderungen bei der Probenhandhabung angepasst. Bei tiefen Temperaturen können beispielsweise in der Transplantationsmedizin Organe oder in der Transfusionsmedizin Blutspenden gelagert werden. Diese Techniken sind auf die Anwendung mit relativ großen Probenvolumen (ml- bis 1-Bereich) beschränkt.

In der Zellbiologie und zunehmend in der molekularen Biotechnologie besteht jedoch die Aufgabe, kleinste biologische Proben (Einzelzellen, Zellgruppen oder Zellbestandteile) im tiefgefrorenen Zustand zu speichern und ggf. zu bearbeiten. Es ist bekannt, Proben zur Kryokonservierung auf Substratoberflächen abzulegen (siehe z. B. EP 804 073, DE 199 21 236). Diese Technik kann Nachteile wegen des hohen Platzaufwandes und der Kontaminationsgefahr besitzen.

Alternativ zur Probenablage auf Substraten ist die Verwendung von Kryo-Probenkammern (z. B. in Form von Kapillaren oder dünnwandigen Rohren, siehe z. B. WO 02/46719) bekannt. Die Probenkammern bilden ein zumindest teilweise abgeschlossenes Behältnis und bieten daher einen verbesserten Schutz für die Proben. Ein genereller Nachteil der Kryo-Probenkammern ist jedoch, dass besondere Vorkehrungen zur Beschickung und Halterung der Probenkammern in einem Kryomedium getroffen werden müssen.

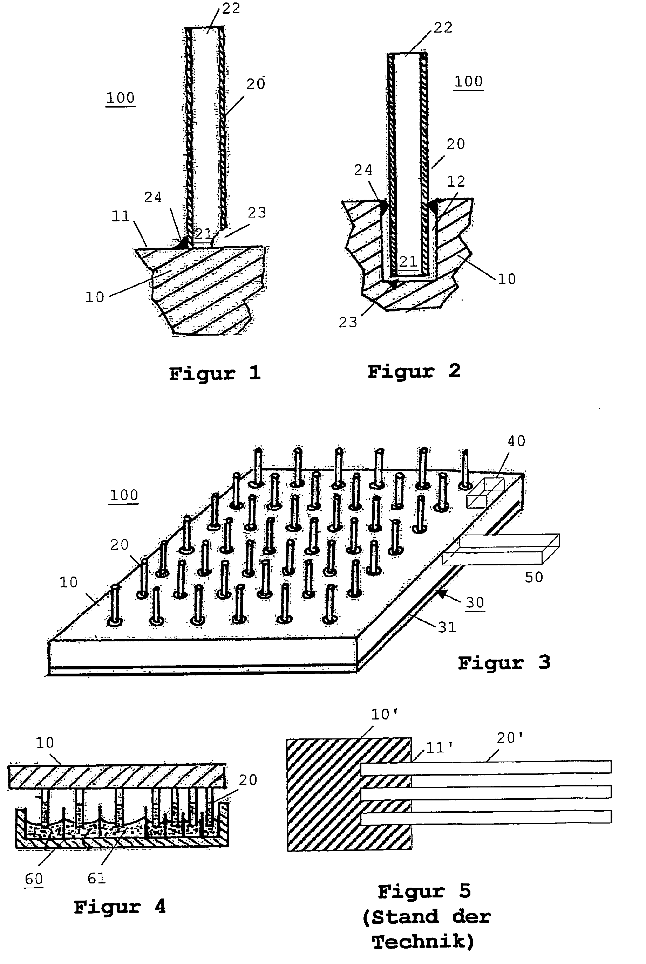

In US 42 62 494 wird eine Kryospeichervorrichtung mit mehreren kapillarförmigen Probenkammern beschrieben, die in einem transportablen Kühlcontainer angeordnet sind. Die Probenkammern sind von einer Wand des Kühlcontainers abstehend mit Abstand voneinander angeordnet. Eine schematische Seitenansicht dieser herkömmlichen Halterung ist in Figur 5 gezeigt. Es ist ein Trägerblock 10' vorgesehen, in den rohrförmige Probenkammern 20' gesteckt werden. Hierzu sind im Trägerblock 10' Löcher 11' mit einem passenden Querschnitt vorgesehen. Mit diesem Aufbau können die Probenkammern 20' zwar fixiert und mit gegenseitigem Abstand gehaltert werden. Nachteile ergeben sich jedoch in Bezug auf die Beschickung der Probenkammern und die Stabilität der Halterung insbesondere bei einer langfristigen Lagerung unter Kryobedingungen.

Rohrförmige Probenkammern für die Kryospeicherung werden auch in WO 99/20104 beschrieben. Die Probenkammern sind auf einen Kühlkörper aufgelegt, wobei sich ebenfalls Nachteile bei der Beschickung der Probenkammern ergeben.

Die Aufgabe der Erfindung ist es, eine verbesserte Kryospeichervorrichtung bereitzustellen, mit der Nachteile herkömmlicher Kryospeichervorrichtungen überwunden werden und die insbesondere eine Beschickung mit einer Vielzahl suspendierter Zellen, Zellgruppen oder Zellbestandteile innerhalb kurzer Zeiten und eine selektive, teilweise Entnahme von Probenbestandteilen ermöglicht. Die Kryospeichervorrichtung soll insbesondere auch die Aufzeichnung und das Lesen von Daten ermöglichen, die zu den jeweils gespeicherten Proben gehören. Die Aufgabe der Erfindung ist es auch, ein verbessertes Verfahren zur Kryospeicherung anzugeben.

Diese Aufgaben werden durch Vorrichtungen und Verfahren mit den Merkmalen gemäß den Patentansprüchen 1 oder 10 gelöst. Vorteilhafte Ausführungsformen und Anwendungen der Erfindung ergeben sich aus den abhängigen Ansprüchen.

Eine Grundidee der Erfindung ist es, eine Kryospeichervorrichtung mit einem Trägerblock und mindestens einer auf diesem angeordneten Probenkammer zur Aufnahme einer Suspensionsprobe, die mit einem ersten Ende am Trägerblock befestigt ist und mit dem entgegengesetzten, zweiten Ende vom Trägerblock absteht, dahingehend weiterzuentwickeln, dass an der mindestens einen Probenkammer mit Abstand vom frei, abstehenden, zweiten Ende eine Druckausgleichsöffnung vorgesehen ist. Durch dieses Merkmal wird die Beschickung der mindestens einen Probenkammer unter der Wirkung von Kapillarkräften in einem Zustand ermöglicht, in dem die Probenkammer am Trägerblock befestigt ist. Die Verwendung von komplizierten Dispensereinrichtungen wird vermieden.

Gemäß einer bevorzugten Ausführungsform der Erfindung ist die Druckausgleichsöffnung unmittelbar am ersten Ende der Probenkammer vorgesehen. Vorteilhafterweise wird damit das gesamte Innenvolumen der Probenkammer zur Probenaufnahme genutzt. Die Druckausgleichsöffnung kann durch das Ende der Probenkammer selbst oder eine Ausnehmung in der Wand der Probenkammer an deren ersten Ende gebildet werden. Es können des Weiteren mehrere Druckausgleichsöffnungen vorgesehen sein.

Wenn die mindestens eine Probenkammer mit ihrem ersten Ende auf einer im wesentlichen ebenen Oberfläche des Trägerblocks befestigt ist, können sich Vorteile im Bezug auf einen besonders einfachen Aufbau der Kryospeichervorrichtung ergeben. Wenn alternativ in der Oberfläche des Trägerblocks Vertiefungen als Aufnahmeelemente vorgesehen sind, in denen die mindestens eine Probenkammer zumindest teilweise versenkt angeordnet werden kann, so können sich Vorteile im Bezug auf die Stabilität der Kryospeichervorrichtung ergeben.

Die mindestens eine Probenkammer ist vorzugsweise über eine Sollbruchstelle mit dem Trägerblock verbunden. Durch Ausübung einer mechanischen Kraft am abstehenden Ende der Probenkammer kann diese damit reproduzierbar vom Trägerblock getrennt werden. Dadurch kann eine Entnahme von Teilproben vereinfacht werden.

Besonders bevorzugt ist eine Ausführungsform der erfindungsgemäßen Kryospeichervorrichtung, bei der eine Vielzahl von Probenkammern nadelförmig senkrecht stehend auf dem Trägerblock angeordnet sind. Vorteilhafterweise können die Probenkammern mit Abstand voneinander und dennoch mit hoher Dichte bereitgestellt werden, so dass die Kryospeichervorrichtung ein hohes Fassungsvermögen besitzt. Weitere Vorteile für die Probenbeschickung können sich ergeben, wenn alle Probenkammern die gleiche Größe besitzen, so dass jeweils die zweiten, abstehenden Enden der Probenkammern in einer gemeinsamen Bezugsebene angeordnet sind. Dies ermöglicht eine gleichzeitige Beschickung durch Eintauchen der ersten Enden in ein Probenreservoir.

Gemäß weiteren vorteilhaften Ausführungsformen der Erfindung ist der Trägerblock mit einer Datenspeichereinrichtung, einer Sensoreinrichtung und/oder mindestens einer Kühlfläche ausgestattet. Die feste Verbindung der Datenspeichereinrichtung mit dem Trägerblock besitzt den Vorteil einer dauerhaften Zuordnung von Probendaten zu den gespeicherten Suspensionsproben. Die Sensoreinrichtung, die z. B. einen Temperatursensor umfasst, ermöglicht eine Überwachung der Lagerungsbedingungen. Die Abkühlung der Proben in den Probenkammern kann durch die Kühlfläche am Trägerblock beschleunigt werden.

Ein Gegenstand der Erfindung ist auch ein Verfahren zur Kryospeicherung von Suspensionsproben, bei dem diese unter der Wirkung von Kapillarkräften in die mindestens eine Probenkammer der erfindungsgemäßen Kryospeichervorrichtung aufgenommen und in dieser in einen kryokonservierten Zustand überführt werden. Die erfindungsgemäße Kryospeicherung erfolgt allgemein bei einer Temperatur unterhalb der Raumtemperatur, bei der eine vitalitätserhaltende, andauernde Lagerung der Proben möglich ist. Die gewählte Temperatur und die Dauer der Lagerung sind anwendungsabhängig gewählt. Besonders vorteilhaft ist die Erfindung bei Tieftemperaturlagerungen bei Temperaturen unterhalb von minus 100 °Celsius und insbesondere bei der Temperatur von flüssigem Stickstoff, umsetzbar.

Gemäß einer bevorzugten Ausführungsform des erfindungsgemäßen Verfahrens werden bei einer Kryospeichervorrichtung mit einer Vielzahl vom Probenkammern diese durch Eintauchen in ein Probenreservoir gleichzeitig beschickt. Vorteilhafterweise kann das Probenreservoir in eine Vielzahl von Kompartimenten unterteilt sein, deren Anordnung der Ausrichtung der Probenkammerenden der Kryospeichervorrichtung entspricht, so dass spezifisch in die verschiedenen Probenkammer verschiedene Suspensionsproben aufgenommen werden können.

Gemäß einer weiteren vorteilhaften Ausführungsform der Erfindung werden im Tieftemperaturzustand eine oder mehrere Probenkammern durch mechanische Abtrennung vom Trägerblock gelöst. Damit können sich Vorteile bei der Bearbeitung von Teilproben ergeben.

Weitere Vorteile und Einzelheiten der Erfindung werden aus der folgenden Beschreibung der beigefügten Zeichnungen ersichtlich. Es zeigen:
- Fign. 1 bis 3:: verschiedene Ausführungsformen erfindungsgemäßer Kryospeichervorrichtungen,
- Fig. 4:: eine Illustration der Beschickung einer erfindungsgemäßen Kryospeichervorrichtung, und
- Fig. 5:: eine schematische Seitenansicht einer herkömmlichen Kryospeichervorrichtung (Stand der Technik).

Figur 1 zeigt ausschnittsweise vergrößert eine erste Ausführungsform einer erfindungsgemäßen Kryospeichervorrichtung 100 in schematischer Seitenansicht. Die Kryospeichervorrichtung 100 umfasst einen Trägerblock 10, auf dessen Oberfläche 11 eine Probenkammer 20 angeordnet ist. Der Trägerblock 10 besteht bspw. aus Kunststoff (z. B. TPX, Polysulfon, PE), einem Halbleitermaterial (z. B. Si) oder Keramik. Die geometrischen Dimensionen des Trägerblocks sind je nach den konkreten Anforderungen gewählt und betragen bspw. 1 · 1 · 1 cm³.

Die Probenkammer 20 besteht aus einem Kapillarrohr mit einem Innendurchmesser, der so gering ist, dass eine flüssige Suspensionsprobe unter der Wirkung von Kapillarkräften in das Innere der Probenkammer 20 gezogen wird. Der Innendurchmesser beträgt bspw. 3 µm bis 4 mm, insbesondere 5 µm bis 3 mm. Die Länge der Probenkammer 20 beträgt bspw. 1 mm bis 3 cm. Das Kapillarrohr besteht bspw. aus Glas, einem Halbleitermaterial, Keramik, Metall oder einem anderen inerten Material.

Das Wandmaterial der Probenkammern kann je nach den gewünschten Anforderungen für die Kryospeicherung flüssigkeitsdicht oder permeabel ausgebildet sein. Es kann insbesondere ein ionendurchlässiges Material verwendet werden, wie es von Dialyse-Röhrchen bekannt ist. In das Wandmaterial der Probenkammern oder auf dessen Oberfläche können zusätzlich Sensoren (z. B. Temperatursensoren) vorgesehen sein.

Die Probenkammer 20 ist an ihrem ersten (unteren) Ende auf der Oberfläche 11 des Trägerblocks 10 befestigt. Das zweite, entgegengesetzte Ende 22 des Kapillarrohrs steht vom Trägerblock 10 ab. Es bildet eine Einlassöffnung, über die die Probenaufnahme erfolgt. Erfindungsgemäß ist mit Abstand vom zweiten Ende 22 mindestens eine Druckausgleichsöffnung 23 vorgesehen, die ein Einsaugen einer Suspensionsprobe unter der Wirkung von Kapillarkräften nach Eintauchen in ein Probenreservoir ermöglicht. Der Abstand der Druckausgleichsöffnung 23 vom zweiten Ende 22 ist anwendungsabhängig gewählt. Je größer der Abstand ist, desto größer ist das Fassungsvermögen der Probenkammer 20. Daher wird die Druckausgleichsöffnung 23 vorzugsweise am ersten Ende 21 der Probenkammer 20 angebracht. Da die Funktion der Druckausgleichsöffnung 23 lediglich im Durchlass des bei der Befüllung der Probenkammer 20 verdrängten Gases steht, kann die Druckausgleichsöffnung 23 mit einem minimalen Durchmesser im µm- bis mm-Bereich gebildet sein. Gemäß Figur 1 ist die Druckausgleichsöffnung 23 ein seitlicher Durchbruch in der Wand des Kapillarrohres, das die Probenkammer 20 bildet.

Die Befestigung der Probenkammer 20 auf der Oberfläche 11 erfolgt bspw. durch eine Klebeverbindung 24. Die Klebeverbindung 24 stellt vorteilhafterweise eine Sollbruchstelle dar, an der eine Abtrennung der Probenkammer 20 vom Trägerblock 10 bei Ausübung einer mechanischen Kraft am zweiten Ende 22 erfolgen kann. Alternativ kann die Probenkammer 20 mit dem Trägerblock 10 einstückig gebildet sein. Durch die Druckausgleichsöffnung 23 wird bei dieser Gestaltung die Sollbruchstelle unmittelbar am ersten Ende 21 gebildet.

Die jeweils freien, zweiten Enden 22 der Probenkammern 20 können erfindungsgemäß mit einem Verschluss ausgestattet sein. Der Verschluss umfasst z. B. einen nach der Beschickung der Probenkammern aufgebrachten Pfropf oder Deckel, die eine Versiegelung bilden. Da die Suspensionsprobe unter der Wirkung von Kapillarkräften in der Probenkammer 20 gehalten wird, kann die Probe selbst einen Flüssigkeitsverschluss bilden, der allerdings der Kontamination durch die Umgebung ausgesetzt ist. Am ersten Ende kann nach der Beschickung auch ein Verschluss vorgesehen sein.

Bei der abgewandelten Ausführungsform gemäß Figur 2 ist der Trägerblock 10 für jede Probenkammer 20 mit einer Vertiefung ausgebildet, die jeweils ein Aufnahmeelement 12 darstellt. Die Probenkammer 20 ist zumindest teilweise mit ihrem ersten Ende 21 in das Aufnahmeelement 12 versenkt oder eingelassen. Das Aufnahmeelement 12 ist eine Bohrung, deren innerer Durchmesser geringfügig größer als der Außendurchmesser der Probenkammer 20 ist. Bei der Ausführungsform gemäß Figur 2 wird die Druckausgleichsöffnung 23 durch das erste Ende 21 gebildet. Die Probenkammer 20 ist im Aufnahmeelement 12 mit Abstand von dessen Boden gehaltert, so dass der Druckausgleich nach außen über den Freiraum zwischen der Probenkammer 20 und dem Trägerblock 10 erzeugen kann. Die Befestigung der Probenkammer 20 im Aufnahmeelement 12 erfolgt bspw. mit mindestens einer Klebeverbindung 24, die bspw. am oberen Rand des Aufnahmeelements 12 vorgesehen ist.

Die seitliche Druckausgleichsöffnung kann auch bei der Gestaltung gemäß Figur 2 vorgesehen sein, insbesondere wenn die Probenkammer auf dem Boden des Aufnahmeelements 12 aufsitzt.

Figur 3 zeigt eine weitere Ausführungsform der erfindungsgemäßen Kryospeichervorrichtung 100, bei der eine Vielzahl von kapillarförmigen Probenkammern 20 vorgesehen ist. Die Probenkammern 20 stehen nadelförmig senkrecht auf dem Trägerblock 10, der ein Substrat, ein Gehäuse oder eine Verkapselung für einen Datenspeicher einer Datenspeichereinrichtung 30 bildet. Die Probenkammern 20 sind beispielsweise matrixartig in geraden Reihen und Spalten mit einem anwendungsabhängig gewählten Rastermaß angeordnet. Die Probenkammern 20 können bspw. mit Abständen auf dem Trägerblock 10 angeordnet sein, die rd. 10% des äußeren Durchmessers der Probenkammern entsprechen. Die Ausführungsform gemäß Figur 3 besitzt den Vorteil, dass die Probenaufnahme in definierter Weise einfach durch Eintauchen der zweiten Öffnungen 22 in Vorratsproben durchgeführt werden kann (siehe unten). Außerdem wird die Entnahme von Teilproben erleichtert.

Figur 3 illustriert als weitere Merkmale der erfindungsgemäßen Kryospeichervorrichtung 100 eine Datenspeichereinrichtung 30, eine Sensoreinrichtung 40 und mindestens eine Kühlfläche 50. Diese Merkmale können erfindungsgemäß einzeln oder in Kombination vorgesehen sein.

Die Datenspeichereinrichtung 30 enthält mindestens einen Datenspeicher, der in einem Gehäuse 31 angeordnet ist. Das Gehäuse 31 ist vorzugsweise fest mit dem Trägerblock 10 verbunden oder mit diesem einstückig gebildet. Der Trägeblock 10 kann bspw. Teil einer Verkapselung eines Datenspeichers sein. Der Datenspeicher (nicht dargestellt) besitzt eine Schnittstelle zur zumindest zeitweiligen Aufnahme einer Steckverbindung mit elektrischen Verbindungsleitungen, über die der Datenspeicher mit einer Steuereinrichtung verbunden werden kann.

Als Datenspeicher ist ein an sich bekannter Speicherchip vorgesehen, in dem anwendungsabhängig bestimmte Daten elektrisch oder magnetisch gespeichert sind. Es wird beispielsweise ein sogenannter Flash-Speicher verwendet. In der Datenspeichereinrichtung 30 kann auch ein optischer Speicher vorgesehen sein. Die gespeicherten Daten umfassen beispielsweise bei medizinischen Anwendungen Identifizierungsdaten zur Bestimmung des Spenders und der Arten der suspendierten Zellen, weitere Merkmale des Spenders, wie z. B. die Blutgruppe, ggf. relevante Literaturdaten zu den suspendierten Zelltypen und ggf. bereits vorliegende Messdaten und/oder Bilddaten. Die Bilddaten umfassen beispielsweise licht- oder elektronenmikroskopische Abbildungen von suspendierten Zellen, die der spenderspezifischen Charakterisierung der Zellen und späteren Vergleichen dienen. Die gespeicherten Daten werden während der Kryospeicherung abgerufen und/oder ergänzt.

Die schematisch gezeigte Sensoreinrichtung 40 umfasst bspw. einen Temperatursensor, mit dem laufend die Temperatur der Kryospeichervorrichtung 100 erfasst werden kann. Der Temperatursensor ist vorzugsweise mit der Datenspeichereinrichtung 30 verbunden, um in dieser im Zeitverlauf die gemessenen Temperaturwerte zu speichern und um die Bedingungen der Kryospeicherung auch langfristig zu überwachen. Der Temperatursensor umfasst bspw. einen Sensor vom Typ PT 100.

Die mindestens eine Kühlfläche 50 umfasst eine oder mehrere schicht- oder plattenförmige Ausbuchtungen des Trägerblocks 10. Die Kühlfläche 50 vergrößert die Oberfläche des Trägerblocks 10 und beschleunigt damit dessen Abkühlung in einem fluiden Kühlmedium. Die mindestens eine Kühlfläche 50 ist vorzugsweise mit dem Material des Trägerblocks 10 einstückig gebildet.

Die Verwendung einer erfindungsgemäßen Kryospeichervorrichtung, beispielsweise gemäß Figur 3, erfolgt entsprechend den folgenden Schritten. Erstens erfolgt eine Beschickung der Probenkammern. Suspensionsproben werden unter der Wirkung von Kapillarkräften aus Vorratsbehältern, z. B. den Wells einer Titerplatte, in die Probenkammern aufgenommen.

Die Kryospeichervorrichtung 100 wird vorzugsweise gemäß Figur 4 über Kopf in ein Probenreservoir 60 gesenkt, in dem in einer Vielzahl von Kompartimenten 61 gleiche oder verschiedene Suspensionsproben vorgehalten werden. Die Einlassöffnungen der Probenkammern 20 ragen jeweils in eines der Kompartimente. Unter der Wirkung der Kapillarkräfte werden Suspensionsproben in die Probenkammer 20 gesogen. Die Kompartimente 61 sind mit verschiedenen Abständen oder Rastermaßen entsprechend der Anordnung der Probenkammern 20 positioniert. Das Probenreservoir 60 wird beispielsweise durch eine Mikro- oder Nanotiterplatte gebildet.

Daten zur Charakterisierung der aufgenommenen Suspensionsproben werden in die Datenspeichereinrichtung 30 eingeschrieben. Schließlich erfolgt der Konservierungsschritt. Die Kryospeichervorrichtung wird mindestens mit den Probenkammern 20, vorzugsweise jedoch auch mit der Datenspeichereinrichtung 30 in eine Umgebung mit reduzierter Temperatur überführt. Diese Umgebung ist beispielsweise in einem Kryobehälter mit flüssigem Stickstoff oder mit gasförmigem Stickstoff bei T = - 120°C gegeben.

Die Entnahme von Proben von der erfindungsgemäßen Kryospeichervorrichtung erfolgt anwendungsabhängig entsprechend einem der folgenden Prinzipien. Erstens ist es möglich, die gesamte Kryospeichervorrichtung aufzutauen und den Inhalt der mindestens einen Probenkammer zu entnehmen. Dies erfolgt beispielsweise durch Anlagen eines Unterdruckes an eines der Enden der mindestens einen Probenkammer. Alternativ ist es möglich, Proben oder Teilproben im tiefgekühlten Zustand zu entnehmen, indem einzelne Probenkammern oder Teile von Probenkammern mit einer Trennvorrichtung mechanisch von der übrigen Kryospeichervorrichtung abgetrennt (z. B. abgebrochen) werden.

Die in der vorstehenden Beschreibung, den Ansprüchen und den Zeichnungen offenbarten Merkmale der Erfindung können sowohl einzeln oder auch in Kombination für die Verwirklichung der Erfindung in ihren verschiedenen Ausgestaltungen von Bedeutung sein.

## Patentansprüche

1. Kryospeichervorrichtung (100) mit einem Trägerblock (10), auf dem mindestens eine kapillarförmige Probenkammer (20) zur Aufnahme einer Suspensionsprobe angeordnet ist, so dass ein erstes Ende (21) der Probenkammer (20) am Trägerblock (10) befestigt ist und ein zweites, entgegengesetztes Ende (22) der Probenkammer (20) frei vom Trägerblock (10) absteht,
**dadurch gekennzeichnet, dass**
die mindestens eine Probenkammer (20) mit Abstand vom zweiten Ende (22) eine Druckausgleichsöffnung (23) aufweist.

2. Kryospeichervorrichtung nach Anspruch 1, bei der die Druckausgleichsöffnung (23) am ersten Ende (21) der mindestens einen Probenkammer (20) angeordnet ist.

3. Kryospeichervorrichtung nach einem der vorhergehenden Ansprüche, bei der das erste Ende (21) der mindestens einen Probenkammer (20) auf einer Oberfläche (11) des Trägerblocks (10) angeordnet ist.

4. Kryospeichervorrichtung nach einem der vorhergehenden Ansprüche 1 oder 2, bei der das erste Ende (21) der mindestens einen Probenkammer (20) in einem Aufnahmeelement (12) des Trägerblocks (10) angeordnet ist.

5. Kryospeichervorrichtung nach einem der vorhergehenden Ansprüche, bei der die mindestens eine Probenkammer (20) über eine Sollbruchstelle (23) mit dem Trägerblock (10) verbunden ist.

6. Kryospeichervorrichtung nach einem der vorhergehenden Ansprüche, bei der eine Vielzahl von Probenkammern (20) vorgesehen sind, die nadelförmig senkrecht stehend auf dem Trägerblock (10) angeordnet sind.

7. Kryospeichervorrichtung nach einem der vorhergehenden Ansprüche, bei der eine Vielzahl von Probenkammern (20) vorgesehen sind, deren zweite, abstehende Enden (22) in einer gemeinsamen Bezugsebene angeordnet sind.

8. Kryospeichervorrichtung nach einem der vorhergehenden Ansprüche, bei der der Trägerblock (10) mit einer Datenspeichereinrichtung (30) verbunden ist.

9. Kryospeichervorrichtung nach einem der vorhergehenden Ansprüche, bei der der Trägerblock (10) mit mindestens einem Sensor (40), insbesondere einem Temperatursensor, und/oder Kühlflächen (50) verbunden ist.

10. Verfahren zur Speicherung mindestens einer Suspensionsprobe in einem Tieftemperaturzustand, mit den Schritten:
- Aufnahme der mindestens einen Suspensionsprobe in mindestens eine Probenkammer (20) einer Kryospeichervorrichtung nach einem der vorhergehenden Ansprüche, indem die mindestens eine Probenkammer (20) mit dem zweiten Ende in einen Suspensionsvorrat getaucht und die Probe unter der Wirkung von Kapillarkräften in die Probenkammer (20) gezogen wird, und
- Überführung der Suspensionsprobe in einen Tieftemperaturzustand durch Positionieren mindestens eines Teils der Kryospeichervorrichtung in einem Kryomedium.

11. Verfahren nach Anspruch 10, bei dem der Suspensionsvorrat in einem Probenreservoir (60) mit einer Vielzahl getrennter Kompartimente (61) angeordnet ist, in die eine Vielzahl von Probenkammern (20) zur Beschickung gleichzeitig eingetaucht werden.

12. Verfahren nach einem der Ansprüche 10 bis 11, bei dem vom Trägerblock (10) im Tieftemperaturzustand mindestens eine Probenkammer (20) durch mechanische Abtrennung abgelöst wird.

13. Verfahren nach einem der Ansprüche 10 bis 12, bei dem die zweiten Enden (22) der mindestens einen Probenkammer (20) nach der Beschickung verschlossen werden.

## Claims

1. Cryoconservation device (100) with a support block (10), on which at least one capillary-type sample chamber (20) is arranged to receive a suspension sample, so that a first end (21) of the sample chamber (20) is secured to the support block (10) and a second opposite end (22) of the sample chamber (20) projects freely from the support block (10), **characterised in that** the at least one sample chamber (20) has a pressure compensation opening (23) at a distance from the second end (22).

2. Cryoconservation device according to Claim 1, wherein the pressure compensation opening (23) is arranged at the first end (21) of the at least one sample chamber (20).

3. Cryoconservation device according to one of the preceding claims, wherein the first end (21) of the at least one sample chamber (20) is arranged on a surface (11) of the support block (10).

4. Cryoconservation device according to one of the preceding Claims 1 or 2, wherein the first end (21) of the at least one sample chamber (20) is arranged in a receiving element (12) of the support block (10).

5. Cryoconservation device according to one of the preceding claims, wherein the at least one sample chamber (20) is connected to the support block (10) via a predetermined breaking point (23).

6. Cryoconservation device according to one of the preceding claims, wherein a plurality of sample chambers (20) are provided, which are arranged to stand vertically on the support block (10) in needle form.

7. Cryoconservation device according to one of the preceding claims, wherein a plurality of sample chambers (20) are provided, the second projecting ends (22) of which are arranged in a common reference plane.

8. Cryoconservation device according to one of the preceding claims, wherein the support block (10) is connected to a data storage unit (30).

9. Cryoconservation device according to one of the preceding claims, wherein the support block (10) is connected to at least one sensor (40), in particular a temperature sensor, and/or cooling surfaces (50).

10. Method for storing at least one suspension sample in a cryo state, with the steps:
• placement of the at least one suspension sample into at least one sample chamber (20) of a cryoconservation device according to one of the preceding claims by dipping the at least one sample chamber (20) into a suspension stock at the second end and drawing the sample into the sample chamber (20) under the action of capillary forces, and
• transformation of the suspension sample into a cryo state by positioning at least one portion of the cryoconservation device in a cryogenic medium.

11. Method according to Claim 10, wherein the suspension stock is arranged in a sample reservoir (60) with a plurality of separate compartments (61), into which a plurality of sample chambers (20) are dipped simultaneously for filling.

12. Method according to one of Claims 10 to 11, wherein at least one sample chamber (20) is detached from the support block (10) in cryo state by mechanical separation.

13. Method according to one of Claims 10 to 12, wherein the second ends (22) of the at least one sample chamber (20) are closed after filling.

## Revendications

1. Dispositif de cryoconservation (100) avec un bloc support (10) sur lequel est disposée au moins une chambre d'échantillons de forme capillaire (20) pour accueillir un échantillon en suspension, de sorte qu'une première extrémité (21) de la chambre d'échantillons (20) soit fixée sur le bloc support (10) et qu'une deuxième extrémité opposée (22) de la chambre d'échantillons (20) dépasse librement du bloc support (10),
**caractérisé en ce que** la au moins une chambre d'échantillons (20) comporte à distance de la deuxième extrémité (22) un orifice de compensation de pression (23).

2. Dispositif de cryoconservation selon la revendication 1, sur lequel l'orifice de compensation de pression (23) est disposé sur la première extrémité (21) de la au moins une chambre d'échantillons (20).

3. Dispositif de cryoconservation selon l'une quelconque des revendications précédentes, sur lequel la première extrémité (21) de la au moins une chambre d'échantillons (20) est disposée sur une surface (11) du bloc support (10).

4. Dispositif de cryoconservation selon l'une quelconque des revendications précédentes 1 ou 2, sur lequel la première extrémité (21) de la au moins une chambre d'échantillons (20) est disposée dans un élément de logement (12) du bloc support (10).

5. Dispositif de cryoconservation selon l'une quelconque des revendications précédentes, sur lequel la au moins une chambre d'échantillons (20) est reliée au bloc support (10) par une zone de rupture prévue (23).

6. Dispositif de cryoconservation selon l'une quelconque des revendications précédentes, sur lequel on a prévu une pluralité de chambres d'échantillons (20), qui sont disposées sous forme aciculaire, debout à la verticale sur le bloc support (10).

7. Dispositif de cryoconservation selon l'une quelconque des revendications précédentes, sur lequel on a prévu une pluralité de chambres d'échantillons (20), dont les deuxièmes extrémités débordantes (22) sont disposées dans un plan de référence commun.

8. Dispositif de cryoconservation selon l'une quelconque des revendications précédentes, sur lequel le bloc support (10) est relié à un dispositif de mémoire de données (30).

9. Dispositif de cryoconservation selon l'une quelconque des revendications précédentes, sur lequel le bloc support (10) est relié à au moins un capteur (40), notamment un capteur de températures et/ou avec des surfaces de refroidissement (50).

10. Procédé de conservation d'au moins un échantillon en suspension dans un état de cryoconservation, avec les étapes :
- placement du au moins un échantillon en suspension dans au moins une chambre d'échantillons (20) d'un dispositif de cryoconservation selon l'une quelconque des revendications précédentes, dans lequel on plonge la au moins une chambre d'échantillons (20) par la deuxième extrémité dans une réserve de suspension et on tire l'échantillon sous l'effet des forces capillaires dans la chambre d'échantillons (20), et
- transfert de l'échantillon en suspension dans un état cryogénique par positionnement d'au moins une partie du dispositif de cryoconservation dans un milieu cryogénique.

11. Procédé selon la revendication 10, dans lequel la réserve de suspension est placée dans un réservoir d'échantillons (60) avec une pluralité de compartiments séparés (61) dans lesquels on plonge simultanément une pluralité de chambres d'échantillons (20) pour le chargement.

12. Procédé selon l'une quelconque des revendications 10 à 11, dans lequel on détache du bloc support (10) à l'état cryogénique au moins une chambre d'échantillons (20), par séparation mécanique.

13. Procédé selon l'une quelconque des revendications 10 à 12, dans lequel on ferme les deuxièmes extrémités (22) de la au moins une chambre d'échantillons (20) après le chargement.
